# EUROPÄISCHE PATENTSCHRIFT

(11) **EP 3 034 412 B1**
(45) Veröffentlichungstag und Bekanntmachung des Hinweises auf die Patenterteilung: **11.10.2017**
(21) Anmeldenummer: 15450038.3
(22) Anmeldetag: 10.11.2015
(51) Int. Cl.: B64G 1/22, B64G 1/26, B64G 1/40, B64G 1/24, F02K 9/84

(54) **STELLMECHANISMUS ZUM VERSTELLEN WENIGSTENS EINES TRIEBWERKS EINES RAUMFLUGKÖRPERS**
REGULATING MECHANISM FOR ADJUSTING AT LEAST ONE ENGINE OF A SPACECRAFT
MECANISME DE REGLAGE D'AU MOINS UNE TURBINE D'UN CORPS SPATIAL

(30) Priorität: 16.12.2014 AT 9132014
(43) Veröffentlichungstag der Anmeldung: 22.06.2016
(73) Patentinhaber: RUAG Space GmbH, 1120 Wien (AT)
(72) Erfinder: Janu, Paul, A-1030 Wien (AT); Neugebauer, Christian, A-1230 Wien (AT)
(74) Vertreter: Keschmann, Marc

(56) Entgegenhaltungen:
- WO-A1-2010/025486
- NL-C2- 1 032 158
- US-A- 4 955 559
- US-A1- 2014 361 123
- US-B1- 6 565 043

## Beschreibung

Die Erfindung betrifft einen Stellmechanismus zum Verstellen wenigstens eines Triebwerks eines Raumflugkörpers umfassend eine Triebwerksplatte für das wenigstens eine Triebwerk, einen schwenkbaren Ausleger zum Verschwenken der Triebwerksplatte zwischen einer eingeklappten, dem Raumflugkörper benachbarten Position und wenigstens einer ausgeklappten, von dem Raumflugkörper beabstandeten Position, und einen ersten Verstellantrieb zum Verschwenken des Auslegers und einen zweiten Verstellantrieb zum Orientieren der Triebwerksplatte relativ zum Ausleger.

Elektrische Triebwerke von Raumflugkörpern, wie z.B. Satelliten, benötigen zur Einstellung des Schubvektors einen Stellmechanismus. Beispielsweise ist es in vielen Fällen erforderlich, dass der Schubvektor des Antriebes durch den Schwerpunkt des Raumflugkörpers verläuft, damit der Raumflugkörper keinen Drehimpuls erfährt, welcher zu einer Eigenrotation führen könnte. Dabei ist darauf Rücksicht zu nehmen, dass der Schwerpunkt des Raumflugkörpers mit zunehmendem Treibstoffverbrauch Veränderungen unterworfen ist. Für bestimmte Flugmanöver ist aber auch die Einstellung eines Schubvektors erforderlich, der am Schwerpunkt vorbeizeigt.

Stelleinrichtungen für Triebwerke haben weiters die Aufgabe diese Bauteile mit dem Raumflugkörper mechanisch zu verbinden, und zwar mit einer solchen Steifigkeit, dass die Startlasten eines Raketenstarts ertragen werden und Störmomente im Betrieb sich nicht auf die Präzision der Ausrichtung auswirken.

Stellmechanismen umfassen in der Regel wenigstens einen um wenigstens eine Schwenkachse schwenkbar gelagerten Arm oder Ausleger. Die Verschwenkung des Arms wird von einem Stellmotor bewerkstelligt. Die Verschwenkung erlaubt es, die Triebwerke beim Start in einer eingeklappten Lage zu halten, um die beim Start wirkenden Kräfte bestmöglich aufnehmen zu können, und im Orbit zur Einnahme einer Manövrierposition auszuklappen. Dabei sollen sich die Triebwerke während des Betriebs in einer Position befinden, dass ihre abstrahlenden Elemente möglichst wenig in den Bereich der Solarpanele des Raumflugkörpers wirken. Herkömmliche Stellmechanismen mit ausklappbarem Ausleger umfassen hierbei einen ersten Verstellantrieb zum Verschwenken des Auslegers und einen zweiten Verstellantrieb zum Orientieren der Triebwerksplatte relativ zum Ausleger. Jeder Verstellantrieb umfasst eine Schwenkanordnung mit jeweils einer einzigen Schwenkachse, sodass eine derartige Anordnung erhebliche Einschränkungen einerseits hinsichtlich der Einstellung des Schubvektors und andererseits hinsichtlich der Wahl der Verstellbahn mit sich bringt. Aus dem Stand der Technik ist beispielsweise Dokument US 6 565 043 B1 bekannt, welches als nächstliegender Stand der Technik angesehen wird und alle Merkmale des Oberbegriffes des Anspruchs 1 offenbart.

Die Erfindung zielt daher darauf ab, einen Stellmechanismus dahingehend weiterzubilden, dass die oben genannten Einschränkungen vermieden werden können. Weiters zielt die Erfindung darauf ab, die folgenden Vorgaben zumindest teilweise zu erfüllen:
Im eingeklappten Zustand des Triebwerks:
   - hohe Steifigkeit und damit hohe Eigenfrequenz.
   - Die Anzahl der zur Erreichung der hohen Steifigkeit notwendigen Festhaltevorrichtungen zum Raumflugkörper soll minimiert sein.
   - Die Triebwerksplatte soll parallel zum Satellitenpanel gelagert sein, um eine massenarme Konfiguration während des Starts zu ermöglichen, und um Zugänglichkeit zu den Triebwerken vor dem Start zu ermöglichen.

Während des Ausklappens des Triebwerks:
- Das während des Ausklappens überstrichene Volumen soll nicht den Verfahrbereich des Solarpanels überdecken, um Kollisionen auszuschließen.
- Die Triebwerke sollen in eine Position gebracht werden, in der ihre abstrahlenden Elemente möglichst wenig in den Bereich der Solarpanele wirken, um Erosion der Solarpanele zu verhindern.
- Das Ausklappen der Triebwerke zu Test-Zwecken am Boden unter Erdanziehung soll mit einfachen Hilfsmitteln möglich sein, beispielsweise durch Kompensation der Triebwerksmasse durch Abspannen mit einem Seil.

Im ausgeklappten Zustand des Triebwerks:
- Es soll eine Konfiguration mit einem Triebwerk und mit mehreren Triebwerken, z.B. einem nominalen und einem redundanten Triebwerk möglich sein.
- In einer mittleren Stellung soll der Vortriebsstrahl des Triebwerks durch den Schwerpunkt des Raumflugkörpers weisen.
- Der Vortriebsstrahl des Triebwerks soll aus dieser mittleren Stellung hinaus verdreht werden können, sodass er allseitig am Schwerpunkt vorbei zeigen kann.
- Auf den Grundriss des Raumflugkörpers bezogen, soll der Vortriebsstrahl des Triebwerks weiters aus dieser mittleren Stellung hinaus parallel verschoben werden können.
- Die Lage der Drehachsen soll einen Betrieb des Satelliten mit geringem Treibstoffverbrauch ermöglichen.

Zur Lösung dieser Aufgabe sieht die Erfindung vor, dass der erste Verstellantrieb eine wenigstens einachsige Schwenkvorrichtung umfassend eine erste Schwenkachse aufweist und der zweite Verstellantrieb eine wenigstens zweiachsige Schwenkvorrichtung umfassend eine zweite und eine dritte Schwenkachse aufweist, wobei die zweite oder die dritte Schwenkachse zur ersten Schwenkachse parallel verläuft oder in die parallele Lage bringbar ist. Der erfindungsgemäße Stellmechanismus weist somit wenigstens drei Schwenkachsen auf, sodass die Anzahl der Freiheitsgrade erhöht werden kann. Entscheidend ist hierbei, dass eine Schwenkanordnung mit einer Schwenkachse als Schwenkantrieb des Auslegers vorgesehen ist und dass eine Schwenkanordnung mit wenigstens zwei Schwenkachsen für die Orientierung der Triebwerksplatte relativ zum Ausleger vorgesehen ist. Dabei ist die für die Verschwenkung des Auslegers relativ zum Raumflugkörper vorgesehene erste Achse vorzugsweise unmittelbar am Raumflugkörper angeordnet, während die zweite und die dritte Achse mittels des Auslegers vom Raumflugkörper beabstandet und insbesondere nahe der Triebwerksplatte angeordnet sind.

Dadurch, dass die zweite oder die dritte Schwenkachse zur ersten Schwenkachse parallel verläuft oder in die parallele Lage bringbar ist, kann in einfacher Weise eine Parallelverschiebung der Triebwerke realisiert werden. Dabei ist es unerheblich, ob die zweite oder die dritte Schwenkachse parallel zur ersten Schwenkachse verläuft. Die Schwenkvorrichtung mit der zweiten Schwenkachse ist hierbei vorzugsweise näher zum Ausleger angeordnet als die Schwenkvorrichtung mit der dritten Schwenkachse. Wenn die Schwenkvorrichtung mit der zweiten Schwenkachse starr am Ausleger angeordnet ist, verbleibt die zweite Schwenkachse unabhängig vom jeweils eingestellten Schwenkwinkel der anderen Schwenkvorrichtungen in ihrer zur ersten Schwenkachse parallelen Lage, sodass in jedem Zustand des Stellmechanismus eine Parallelverschiebung der Triebwerke erfolgen kann. Wenn die zweite Schwenkachse nicht parallel zur ersten Schwenkachse verläuft, sieht die Erfindung vor, dass die dritte Schwenkachse einen zur ersten Schwenkachse parallelen Verlauf hat oder in diese parallele Lage gebracht werden kann. Letzteres erfolgt insbesondere dadurch, dass die Schwenkvorrichtung mit der zweiten Schwenkachse in eine Schwenkposition gebracht wird, in der die dritte Schwenkachse die geforderte parallele Lage aufweist.

Im Rahmen der Erfindung erlaubt die zweiachsige Verschwenkbarkeit der Triebwerksplatte relativ zum Ausleger eine Verdrehung solcherart, dass der Vortriebsstrahl des Triebwerks allseitig am Schwerpunkt vorbeizeigen kann. Insbesondere sind mittels der erfindungsgemäßen Ausbildung folgende Verstellmöglichkeiten durchführbar: Die Triebwerke können zunächst in einer mittleren Stellung positioniert werden, in welcher der Vortriebsstrahl des Triebwerks durch den Schwerpunkt des Raumflugkörpers führt. Eine Feineinstellung der mittleren Stellung kann hierbei durch Betätigen der einzelnen Antriebsmotoren erfolgen. Aus der mittleren Stellung kann das Triebwerk so hinaus verdreht werden, sodass es allseitig am Schwerpunkt vorbei zeigen kann. Auf den Grundriss des Raumflugkörpers bezogen kann der Vortriebsstrahl des Triebwerks weiters aus dieser mittleren Stellung hinaus durch gegenseitigen Betrieb der den etwa parallel angeordneten Schwenkachsen zugeordneten Antriebsmotoren parallel verschoben werden.

Die erfindungsgemäße Lage der Drehachsen erlaubt einen Betrieb des Raumflugkörpers mit geringem Treibstoffverbrauch, da die Triebwerke in eine für einen treibstoffsparenden Betrieb optimale Lage gebracht werden können.

Weiters ist eine Konfiguration sowohl mit einem Triebwerk als auch mit mehreren Triebwerken, z.B. einem nominalen und einem redundanten Triebwerk, ohne weiteres möglich. Auf Grund der von der Achsanordnung gegebenen Möglichkeit der Parallelverschiebung der Triebwerksplatte kann jedes Triebwerk bei Bedarf in eine optimale Lage bewegt werden.

Die erfindungsgemäße Achsanordnung mit einer Schwenkachse zum Verschwenken des Auslegers führt dazu, dass die Schwenkbewegung so konfiguriert werden kann, dass das während des Ausklappens überstrichene Volumen nicht den Verfahrbereich eines in der Nähe der Triebwerke angeordneten Solarpanels überdeckt, sodass Kollisionen ausgeschlossen werden können. Die Ausklappbewegung wird hierbei in einfacher Weise durch die Lage der ersten Achse bestimmt. Wenn, wie dies einer bevorzugten Ausbildung entspricht, die erste Achse geneigt zur Seitenwand des Raumflugkörpers, insbesondere Satelliten, angeordnet ist, bewegen sich die Triebwerke während des Ausklappens in Richtung zur Unterseite des Satelliten und kollidieren somit nicht mit dem überstrichenen Volumen der bereits ausgefahrenen Solarpanele.

Außerdem können die Triebwerke auf diese Weise in eine Position gebracht werden, in der ihre abstrahlenden Elemente möglichst wenig in den Bereich der Solarpanele strahlen, um eine Erosion der Solarpanele zu verhindern. Die erste Schwenkachse ist bevorzugt so angeordnet, dass sich die Triebwerke nach dem Ausklappen unterhalb des Satelliten befinden, sodass die Distanz zwischen abstrahlenden Elementen und Solarpanelen maximiert wird.

Eine bevorzugte Weiterbildung sieht vor, dass der erste Verstellantrieb eine an dem dem Raumflugkörper zugewandten Ende des Auslegers angeordnete erste Rotationsantriebseinrichtung zum Verschwenken des Auslegers um die erste Schwenkachse und der zweite Verstellantrieb eine die zweite Schwenkachse aufweisende zweite Rotationsantriebseinrichtung und eine die dritte Schwenkachse aufweisende dritte Rotationsantriebseinrichtung zwischen dem dem Raumflugkörper abgewandten Ende des Auslegers und der Triebwerksplatte umfasst. Die Verschwenkbarkeit um jede der drei Achsen wird somit von einer eigenen Rotationsantriebseinrichtung bewerkstelligt, sodass ein besonders robuster Aufbau und eine zuverlässige Funktionsweise gewährleistet sind. Mit Vorteil sind die Rotationsantriebseinrichtungen hierbei von Elektromotoren gebildet.

Um die geforderte zweiachsige Verschwenkbarkeit mittels des zweiten Verstellantriebs zu erreichen, ist bevorzugt vorgesehen, dass die zweite und die dritte Schwenkachse zueinander geneigt, insbesondere im rechten Winkel, verlaufen.

Wie bereits erwähnt, ist die erste Schwenkachse bevorzugt unmittelbar am Raumflugkörper, insbesondere Satelliten, angeordnet und von der zweiten und der dritten Schwenkachse durch den Ausleger getrennt. Die Schwenkvorrichtung mit der zweiten Schwenkachse und die Schwenkvorrichtung mit der dritten Schwenkachse sind bevorzugt in unmittelbarer Nähe zueinander angeordnet. In diesem Zusammenhang sieht eine bevorzugte Weiterbildung der Erfindung vor, dass die Länge des Auslegers größer ist als der Abstand zwischen dem zweiten Verstellantrieb, insbesondere der zweiten Rotationsantriebseinrichtung, und der Triebwerksplatte. Insbesondere entspricht die Länge des Auslegers mindestens dem zweifachen, insbesondere mindestens dem dreifachen, insbesondere mindestens dem vierfachen des Abstands zwischen dem zweiten Verstellantrieb, insbesondere der zweiten Rotationsantriebseinrichtung, und der Triebwerksplatte.

Um die Triebwerksplatte samt dem wenigstens einen daran angebrachten Triebwerk während des Starts zu fixieren, sieht eine bevorzugte Ausführung vor, dass die Triebwerksplatte eine Festhaltevorrichtung aufweist, die in der eingeklappten Position der Triebwerksplatte mit dem Raumflugkörper in Wirkverbindung bringbar ist. Die Ausführung ist bevorzugt so getroffen, dass die Triebwerksplatte in der eingeklappten Position im Wesentlichen parallel zur Seitenwand des Raumflugkörpers, insbesondere Satelliten, ausgerichtet ist. Dies bewirkt eine hohe Steifigkeit und damit eine hohe Eigenfrequenz der Konstruktion, weil die Triebwerksplatte mittels üblicher Festhaltevorrichtungen während der Startphase des Satelliten steif mit der Satellitenwand verbunden werden kann. Die Rotationsantriebseinrichtungen sind dabei ebenfalls nahe der Seitenwand des Satelliten oder nahe der Triebwerksplatte angeordnet und somit ebenfalls steif mit der Satellitenstruktur verbunden. Der einzige freihängende Teil ist der Ausleger, der leichtgewichtig ausgeführt werden kann. Bevorzugt ist der Ausleger als Fachwerkstruktur ausgeführt.

Die beschriebene Ausbildung führt weiters dazu, dass die Anzahl der zur Erreichung der hohen Steifigkeit notwendigen Festhaltevorrichtungen zum Satelliten minimiert werden kann. Wenn die Triebwerksplatte im eingeklappten Zustand parallel zur Seitenwand des Satelliten ausgerichtet ist, kann diese mittels einer oder zweier üblicher Festhaltevorrichtungen während der Startphase des Satelliten mit der Satellitenwand verbunden werden und es ist keine separate Festhaltevorrichtung für die Verstellantriebe erforderlich.

Die parallele Anordnung der Triebwerksplatte zum Satellitenpanel ermöglicht außerdem eine massenarme Konfiguration während des Starts, da keine besonderen Stützstrukturen erforderlich sind. Weiters ist dadurch die Zugänglichkeit zu den Triebwerken vor dem Start ermöglicht.

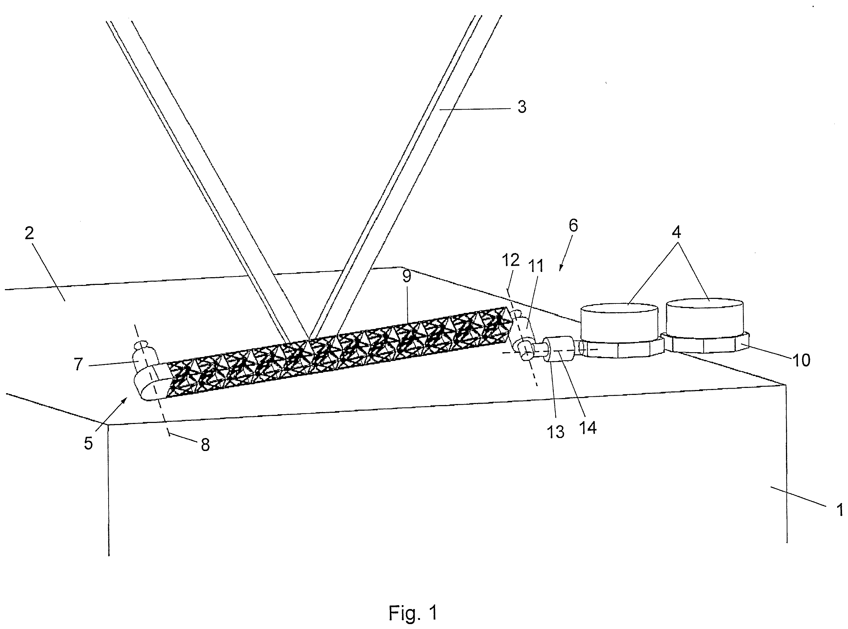

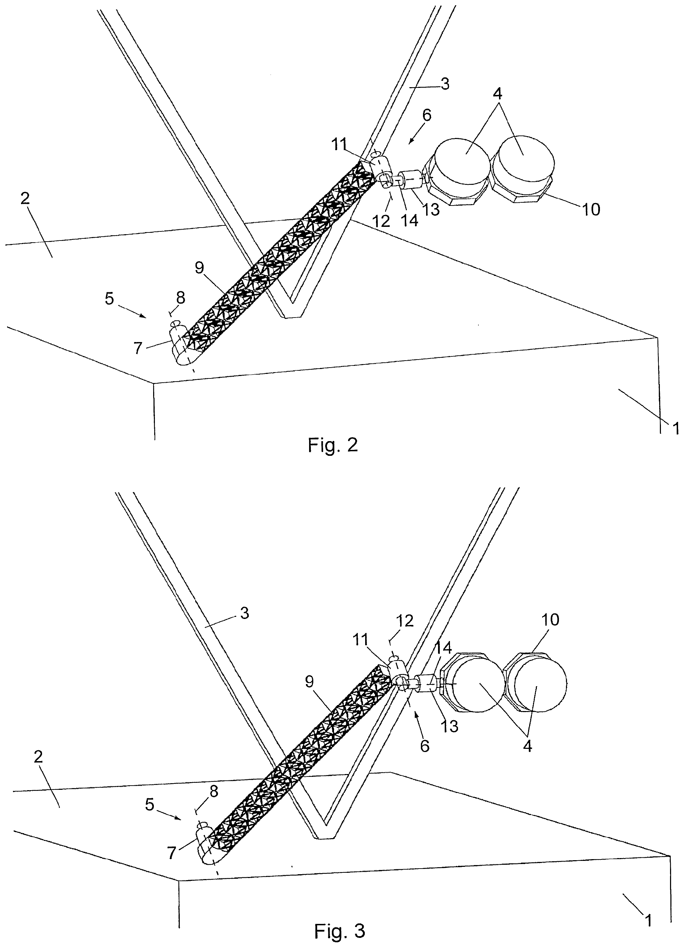

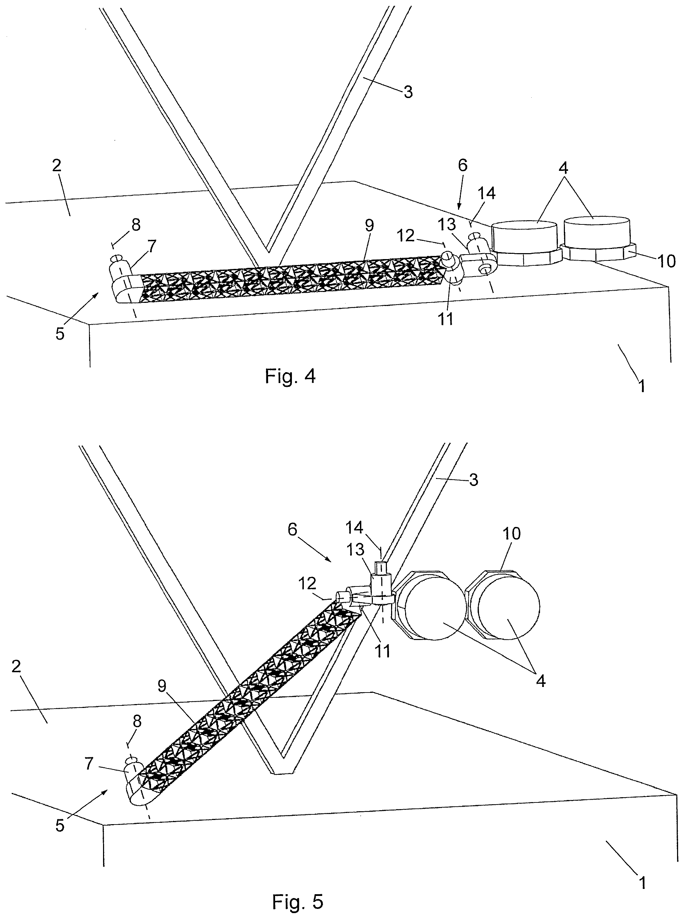

Die Erfindung wird nachfolgend anhand von in der Zeichnung schematisch dargestellten Ausführungsbeispielen näher erläutert. In dieser zeigen Fig. 1 eine perspektivische Ansicht eines erfindungsgemäßen Stellmechanismus in eingeklapptem Zustand, Fig. 2 und 3 den Stellmechanismus gemäß Fig. 1 in ausgeklapptem Zustand in einer ersten und in einer zweiten Stellposition, Fig. 4 eine schematische Darstellung einer alternativen Ausführung des Stellmechanismus in eingeklapptem Zustand und Fig. 5 den Stellmechanismus gemäß Fig. 4 in ausgeklapptem Zustand.

In Fig. 1 ist schematisch ein Raumflugkörper, insbesondere ein Satellit 1 dargestellt, dessen Außenhülle mit 2 bezeichnet ist. Am Satelliten 1 sind drehbar gelagerte Montagestreben 3 für nicht dargestellte Solarpanele befestigt. Weiters sind zwei nebeneinander auf einer Triebwerksplatte 10 angeordnete Triebwerke 4 vorgesehen. Der Einstellung der Position und der Ausrichtung der Triebwerke 4 dient ein Stellmechanismus, der einen ersten Verstellantrieb 5 und einen zweiten Verstellantrieb 6 aufweist. Der erste Verstellantrieb 5 umfasst eine Rotationsantriebseinrichtung 7, deren Rotationsachse mit 8 bezeichnet ist. Die Rotationsantriebseinrichtung 7 ist in nicht näher bezeichneter Weise an der Außenhülle 2 des Satelliten 1 befestigt und ist mit einem Ausleger 9 verbunden. Die Rotationsantriebseinrichtung 7 dient somit als Schwenkantrieb, um den Ausleger 9 relativ zum Satelliten 1 um die Achse 8 zu verschwenken.

Der Ausleger 9 ist im vorliegenden Ausführungsbeispiel als Fachwerkskonstruktion bestehend aus einer Vielzahl von Stäben ausgebildet. Das eine Ende des Auslegers 9 ist mit der Rotationsantriebseinrichtung 7 verbunden und das andere Ende des Auslegers 9 ist mit einer Rotationsantriebseinrichtung 11 des zweiten Verstellantriebs 6 verbunden. Die Rotationsantriebseinrichtung 11 ist so angeordnet, dass ihre Rotationsachse 12 parallel zur Rotationsachse 8 der Rotationsantriebseinrichtung 7 verläuft. Der zweite Verstallantrieb umfasst weiters eine weitere Rotationsantriebseinrichtung 13, deren Rotationsachse 14 quer, insbesondere im rechten Winkel, zur Rotationsachse 12 verläuft. Die Rotationsantriebseinrichtung 12 dient der Verschwenkung der Rotationsantriebseinrichtung 13, die wiederum der Verschwenkung der an ihr befestigten Triebwerksplatte 10 dient. Auf diese Weise gelingt eine zweiachsige Orientierung der Treibwerke 4 relativ zum Ausleger 9.

Im eingeklappten Zustand gemäß Fig. 1 ist die Triebwerksplatte 10 parallel zur Seitenwand bzw. Außenhülle 2 des Satelliten 1 angeordnet. Ausgehend vom eingeklappten Zustand erlaubt der beschriebene Stellmechanismus ein Ausklappen des Auslegers 9 und eine nahezu beliebige Ausrichtung der Triebwerke. Es ist ersichtlich, dass zu keinem Zeitpunkt der Ausklappbewegung der Bewegungsraum der Montagestreben 3 und der Solarpanele überstrichen wird.

Durch gegensinnigen Betrieb der mit parallelen Achsen 8 und 12 ausgestatteten Rotationsantriebseinrichtungen 7 und 11 kann beispielsweise eine Parallelverschiebung der Triebwerke 4 bewirkt werden. Durch den Betrieb um einzelne Achsen kann eine Winkelverstellung der Triebwerke 4 bewirkt werden.

In Fig. 2 ist eine erste ausgeklappte Position dargestellt. Ausgehend von der in Fig. 2 dargestellten Position kann die Triebwerksplatte 10 durch Betrieb der Rotationsantriebseinrichtung 13 um die Achse 14 gekippt werden, sodass die in Fig. 3 dargestellte Ausrichtung der Triebwerke 4 erreicht wird.

In Fig. 4 ist eine abgewandelte Ausbildung des Stellmechanismus gezeigt, bei welcher die Rotationsachsen der Rotationsantriebseinrichtungen 11 und 13 anders orientiert sind als bei der Ausbildung gemäß den Fig. 1 bis 3. Die Rotationsachse 12 der Rotationsantriebseinrichtung 11 verläuft nicht parallel zur Rotationsachse 8, sondern quer dazu, insbesondere in einem rechten Winkel. Die Rotationsachse 14 der Rotationsantriebseinrichtung 13 verläuft in der in Fig. 4 dargestellten, zur Seitenwand 2 bzw. Außenhülle des Satelliten 1 parallelen Lage der Triebwerksplatte 10 parallel zur Rotationsachse 8 der Rotationsantriebseinrichtung 7. Ausgehend von dieser in Fig. 4 dargestellten Startposition (Position beim Start des Satelliten 1) kann wiederum durch gegensinnigen Betrieb der Rotationsantriebseinrichtungen 7 und 13 eine Parallelverschiebung der Triebwerke 4 bewirkt werden.

In Fig. 5 sind die Triebwerke in der ausgeklappten Position gezeigt.

Zusammenfassend wird durch die Erfindung eine Stelleinrichtung für Weltraumanwendungen ermöglicht, die eine Reihe von Vorteilen mit sich bringt:
- Geringe Masse: aufgrund der gewählten Anordnung der Elemente sind keine wesentlichen Stützkonstruktionen nötig.
- Hohe Zuverlässigkeit: aufgrund der geringen Anzahl an Freigabeeinrichtungen ist die Zuverlässigkeit hoch.
- Verwendung von für die Raumfahrt zugelassenen Materialien: Die beschriebene ausklappbare Stelleinrichtung kann mit in der Raumfahrt üblichen Materialien realisiert werden.
- Geringe Fertigungskosten: aufgrund der gewählten Anordnung der Elemente sind keine wesentlichen Stützkonstruktionen nötig, die Anzahl der Teile ist gering.
- Die für die Herstellung verwendeten Prozesse müssen beherrscht und prüfbar sein: Die beschriebene ausklappbare Triebwerkstelleinrichtung kann mit in der Raumfahrt üblichen Fertigungsverfahren realisiert werden.
- Die mechanischen und elektrischen Sicherheiten müssen mit etablierten Berechnungsmethoden nachweisbar sein: Die beschriebene ausklappbare Triebwerkstelleinrichtung kann mit in der Raumfahrt üblichen Berechnungsmethoden nachgewiesen werden.

## Patentansprüche

1. Stellmechanismus zum Verstellen wenigstens eines Triebwerks (4) eines Raumflugkörpers (1) umfassend eine Triebwerksplatte (10) für das wenigstens eine Triebwerk, einen schwenkbaren Ausleger (9) zum Verschwenken der Triebwerksplatte zwischen einer eingeklappten, dem Raumflugkörper benachbarten Position und wenigstens einer ausgeklappten, von dem Raumflugkörper beabstandeten Position, und einen ersten Verstellantrieb (5) zum Verschwenken des Auslegers und einen zweiten Verstellantrieb (6) zum Orientieren der Triebwerksplatte relativ zum Ausleger, wobei
der erste Verstellantrieb eine einachsige Schwenkvorrichtung umfassend eine erste Schwenkachse aufweist und der zweite Verstellantrieb eine wenigstens zweiachsige Schwenkvorrichtung umfassend eine zweite und eine dritte Schwenkachse aufweist, **dadurch gekennzeichnet, dass**
die zweite oder die dritte Schwenkachse zur ersten Schwenkachse parallel verläuft oder in die parallele Lage bringbar ist.

2. Stellmechanismus nach Anspruch 1, **dadurch gekennzeichnet, dass** der erste Verstellantrieb eine erste Rotationsantriebseinrichtung zum Verschwenken des Auslegers um die erste Schwenkachse angeordnet an dem dem Raumflugkörper zugewandten Ende des Auslegers aufweist und der zweite Verstellantrieb eine die zweite Schwenkachse aufweisende zweite Rotationsantriebseinrichtung und eine die dritte Schwenkachse aufweisende dritte Rotationsantriebseinrichtung zwischen dem dem Raumflugkörper abgewandten Ende des Auslegers und der Triebwerksplatte umfasst.

3. Stellmechanismus nach Anspruch 1 oder 2, **dadurch gekennzeichnet, dass** die zweite und die dritte Schwenkachse zueinander geneigt, insbesondere im rechten Winkel, verlaufen.

4. Stellmechanismus nach Anspruch 1, 2 oder 3, **dadurch gekennzeichnet, dass** die Länge des Auslegers größer ist als der Abstand zwischen dem zweiten Verstellantrieb, insbesondere der zweiten Rotationsantriebseinrichtung, und der Triebwerksplatte.

5. Stellmechanismus nach Anspruch 4, **dadurch gekennzeichnet, dass** die Länge des Auslegers mindestens dem zweifachen, insbesondere mindestens dem dreifachen, insbesondere mindestens dem vierfachen des Abstands zwischen dem zweiten Verstellantrieb, insbesondere der zweiten Rotationsantriebseinrichtung, und der Triebwerksplatte entspricht.

6. Stellmechanismus nach einem der Ansprüche 2 bis 5, **dadurch gekennzeichnet, dass** die Rotationsantriebseinrichtungen von Elektromotoren gebildet sind.

7. Stellmechanismus nach einem der Ansprüche 1 bis 6, **dadurch gekennzeichnet, dass** die Triebwerksplatte eine Festhaltevorrichtung aufweist, die in der eingeklappten Position der Triebwerksplatte mit dem Raumflugkörper in Wirkverbindung bringbar ist.

## Claims

1. An adjustment mechanism for adjusting at least one engine (4) of a spacecraft (1), including an engine plate (10) for the at least one engine, a pivotable boom (9) for pivoting the engine plate between a retracted position adjacent the spacecraft and at least one extracted position spaced apart from the spacecraft, and a first adjustment drive (5) for pivoting the boom and a second adjustment drive (6) for orienting the engine plate relative to the boom, wherein the first adjustment drive comprises a monoaxial pivoting device comprising a first pivot axis, and the second adjustment drive comprises an at least biaxial pivoting device comprising a second and a third pivot axis, **characterized in that** the second or the third pivot axis extending, or being positionable, in parallel with the first pivot axis.

2. An adjustment mechanism according to claim 1, **characterized in that** the first adjustment drive comprises a first rotation drive device arranged on the end of the boom facing the spacecraft for pivoting the boom about the first pivot axis, and the second adjustment drive comprises a second rotation drive device comprising the second pivot axis and a third rotation drive device comprising the third pivot axis, between the end of the boom facing away from the spacecraft and the engine plate.

3. An adjustment mechanism according to claim 1 or 2, **characterized in that** the second and the third pivot axes extend so as to be mutually inclined, in particular at a right angle.

4. An adjustment mechanism according to claim 1, 2 or 3, **characterized in that** the length of the boom is larger than the distance between the second adjustment drive, in particular the second rotation drive device, and the engine plate.

5. An adjustment mechanism according to claim 4, **characterized in that** the length of the boom corresponds to at least two times, in particular at least three times, in particular at least four times, the distance between the second adjustment drive, in particular the second rotation drive device, and the engine plate.

6. An adjustment mechanism according to any one of claims 2 to 5, **characterized in that** the rotation drive devices are comprised of electric motors.

7. An adjustment mechanism according to any one of claims 1 to 6, **characterized in that** the engine plate comprises a fastening device which, in the retracted position of the engine plate, can be brought into operative connection with the spacecraft.

## Revendications

1. Mécanisme de réglage servant à ajuster au moins un réacteur (4) d'un engin spatial (1) comprenant une plaque de réacteur (10) pour l'au moins un réacteur, un bras (9) pouvant pivoter servant à faire pivoter la plaque de réacteur entre une position rentrée adjacente à l'engin spatial et au moins une position sortie, tenue à distance de l'engin spatial, et un premier entraînement d'ajustement (5) servant à faire pivoter le bras et un deuxième entraînement d'ajustement (6) servant à orienter la plaque de réacteur par rapport au bras, dans lequel le premier entraînement d'ajustement présente un dispositif de pivotement à un seul axe comprenant un premier axe de pivotement et le deuxième entraînement d'ajustement présente un dispositif de pivotement à au moins deux axes comprenant un deuxième et un troisième axe de pivotement, **caractérisé en ce que**
le deuxième ou le troisième axe de pivotement s'étend de manière parallèle par rapport au premier axe de pivotement ou peut être amené dans la position parallèle.

2. Mécanisme de réglage selon la revendication 1, **caractérisé en ce que** le premier entraînement d'ajustement présente un premier système d'entraînement en rotation, servant à faire pivoter le bras autour du premier axe de pivotement, disposé au niveau de l'extrémité, tournée vers l'engin spatial, du bras, et le deuxième entraînement d'ajustement comprend un deuxième système d'entraînement en rotation présentant le deuxième axe de pivotement et un troisième système d'entraînement en rotation présentant le troisième axe de pivotement entre l'extrémité, opposée à l'engin spatial, du bras et la plaque de réacteur.

3. Mécanisme de réglage selon la revendication 1 ou 2, **caractérisé en ce que** le deuxième et le troisième axe de pivotement s'étendent de manière inclinée l'un par rapport à l'autre, en particulier selon un angle droit.

4. Mécanisme de réglage selon la revendication 1, 2 ou 3, **caractérisé en ce que** la longueur du bras est plus grande que la distance entre le deuxième entraînement d'ajustement, en particulier du deuxième système d'entraînement en rotation, et la plaque de réacteur.

5. Mécanisme de réglage selon la revendication 4, **caractérisé en ce que** la longueur du bras correspond au moins au double, en particulier au moins au triple, en particulier au moins au quadruple de la distance entre le deuxième entraînement d'ajustement, en particulier du deuxième système d'entraînement en rotation, et la plaque de réacteur.

6. Mécanisme de réglage selon l'une quelconque des revendications 2 à 5, **caractérisé en ce que** les systèmes d'entraînement en rotation sont formés par des moteurs électriques.

7. Mécanisme de réglage selon l'une quelconque des revendications 1 à 6, **caractérisé en ce que** la plaque de réacteur présente un dispositif d'immobilisation, qui peut être amené dans une liaison fonctionnelle avec l'engin spatial dans la position rentrée de la plaque de réacteur.
